# EUROPÄISCHE PATENTSCHRIFT

(11) **EP 3 119 706 B1**
(45) Veröffentlichungstag und Bekanntmachung des Hinweises auf die Patenterteilung: **10.06.2020**
(21) Anmeldenummer: 15700659.4
(22) Anmeldetag: 13.01.2015
(51) Int. Cl.: B65G 21/12, A62C 2/22

(54) **TRANSPORTEINRICHTUNG UND TRANSPORTVERFAHREN FÜR BEHÄLTERBEHANDLUNGSANLAGE**
TRANSPORT DEVICE AND TRANSPORT METHOD FOR A CONTAINER TREATMENT INSTALLATION
DISPOSITIF DE TRANSPORT ET PROCÉDÉ DE TRANSPORT POUR UNE INSTALLATION DE TRAITEMENT DE CONTENANT

(30) Priorität: 21.03.2014 DE 102014103900
(43) Veröffentlichungstag der Anmeldung: 25.01.2017
(73) Patentinhaber: Krones AG, 93073 Neutraubling (DE)
(72) Erfinder: MUEHLSTEIN, Peter, 93073 Neutraubling (DE); HUETTNER, Johann, 93073 Neutraubling (DE)
(74) Vertreter: Schuhbießer, Irmgard Gertrud
(86) Internationale Anmeldenummer: PCT/EP2015/050501
(87) Internationale Veröffentlichungsnummer: WO 2015/139851

(56) Entgegenhaltungen:
- EP-A1- 2 376 366
- DE-A1- 4 124 822
- JP-A- S5 262 874
- US-A- 4 753 337
- US-A- 6 116 842

## Beschreibung

Die Erfindung bezieht sich auf eine Transporteinrichtung und ein Transportverfahren für eine Behälterbehandlungsanlage.

Eine Behälterbehandlungsanlage, die beispielsweise eine Blasmaschine, Reinigungsmaschine, Füllmaschine, Etikettiermaschine, Verpackungsmaschine, usw. sein oder umfassen kann, kommt beispielsweise in der Getränkeindustrie zur Herstellung und/oder Befüllung und/oder Verpackung von Behältern zum Einsatz. Behälter sind insbesondere Dosen, Glasflaschen oder Kunststoffflaschen. Die Behälter werden mit einer Transporteinrichtung zu der Behälterbehandlungsanlage und weg von der Behälterbehandlungsanlage transportiert.

Bei manchen Behälterbehandlungsanlagen ist es erforderlich, Anlagenteile in verschiedenen Räumen aufzustellen. Dies kann beispielsweise der Fall sein, wenn aus statischen Gründen oder Brandschutzgründen ein Abschluss zwischen den Räumen vorhanden sein muss. In einem solchen Fall sind Behälter von Raum zu Raum zu transportieren, so dass die Transporteinrichtung durch eine Öffnung in der Raumtrennung zu führen ist.

EP 2 376 366 A1 bzw. WO 2010/081759 A1 zeigt eine Transporteinrichtung für eine Behälterbehandlungsanlage, mit drei Transporträdern zum Transport von Behältern zu einer Behandlungsstation der Behälterbehandlungsanlage, wobei das zweite Transportrad verschiebbar gegenüber dem ersten Transportrad angeordnet ist, um eine schließbare räumliche Trennung zwischen dem zweiten Transportrad und dem ersten Transportrad herzustellen, wobei das zweite Transportrad angrenzend neben dem dritten Transportrad angeordnet ist, und wobei das zweite Transportrad ein klappbares Geländer aufweist.

Bei Bedarf soll jedoch bei der Transporteinrichtung auch eine Raumtrennung aus beispielsweise Brandschutzgründen möglich sein. In diesem Fall sind auch die entsprechenden Brandschutzbestimmungen einzuhalten. Hierfür ist meist eine Brandschutztür oder -klappe vorzusehen, welche im Brandfall geschlossen wird.

Um dieses Problem zu lösen, wurden ab-/ausklappbare Transporteure entwickelt, welche im Normalbetrieb durch die Öffnung in einer Wand geführt werden und zum Schließen der Brandschutztür oder -klappe abgeklappt werden. Solche ab-/ausklappbare Transporteure sind gemäß einer Lösung mit Röllchenübergang zwischen zwei aneinander angrenzenden Transporteuren ausgeführt, welche zum Transport der Behälter von dem einen in den anderen Raum vorhanden sind. Jedoch sind Transporteure mit Röllchenübergang für den Transport der meisten Behälter ungeeignet. Ein weiteres Problem besteht darin, dass die Behälter auf dem Übergang zwischen den Transporteuren stehen bleiben und dadurch beim Abklappen des Transporteurs in den Bereich einer Brandschutztür fallen. Dies führt somit gegebenenfalls zu Verklemmungen bei der Brandschutztür, so dass die Brandschutztür nicht geschlossen werden kann.

Gemäß einer anderen Lösung sind ab-/ausklappbare Transporteure mit angetriebener Kette ausgeführt. Bei solchen klappbaren Transporteuren ist eine Freifahrsteuerung notwendig und die Förderanlage ist wegen dem separaten Antrieb sehr kostenintensiv. Daher ist es Aufgabe der vorliegenden Erfindung, eine verbesserte Transporteinrichtung und ein verbessertes Transportverfahren für eine Behälterbehandlungsanlage zu schaffen, welche die zuvor genannten Probleme lösen und insbesondere einen Transport von Behältern sicher, kostengünstig und einfach auch durch eine Brandschutzwand ermöglichen.

Diese Aufgabe wird durch eine Transporteinrichtung für eine Behälterbehandlungsanlage nach Anspruch 1 gelöst. Die Transporteinrichtung hat wenigstens drei Transporteure zum Transport von Behältern zu einer oder weg von einer Behandlungsstation der Behälterbehandlungsanlage, wie in Anspruch 1 angegeben.

Mit der beschriebenen Transporteinrichtung kann aufgrund der Ausführung eines Transporteurs als verschiebbarer oder verfahrbarer Transporteur die notwendige schließbare Öffnung für eine Brandschutztür sicher, kostengünstig und einfach geschaffen werden.

Ein weiterer Vorteil besteht darin, dass für die Transporteinrichtung keine Freifahrsteuerung notwendig ist, da die auf den Transporteuren der Transporteinrichtung befindlichen Behälter zusammen mit dem verschiebbaren Transporteur aus der Öffnung in einer Wand verschoben werden. Es können keine mit der Transporteinrichtung transportierten Objekte in den Bereich einer Brandschutztür fallen. Somit besteht keine Gefahr von Verklemmungen bei der Brandschutztür.

Zudem ist es von Vorteil, dass bei dem genannten Aufbau der Transporteinrichtung während der Produktion keine Flaschen auf dem verschiebbaren Transporteur stehen bleiben, da kein Messerkantenübergang vorhanden ist. Somit ist auch keine zusätzliche Antriebseinheit für das Freifahren erforderlich. Zudem wird die Gefahr von Anlagenstillständen aufgrund von Fehlerzuständen durch ein Stehenbleiben der Behälter auf dem Transporteur minimiert.

Vorteilhafte weitere Ausgestaltungen der Transporteinrichtung sind in den abhängigen Ansprüchen angegeben.

Möglicherweise kann es im Bereich eines schrägen Uberschubs von Behältern vom verschiebbaren Transporteur zu einem anderen der wenigstens zwei Transporteure oder umgekehrt ein Kettenübergang ohne Zwischenraum ausgeführt sein. Dadurch kann der Überschub der Behälter so störungsfrei wie möglich erfolgen.

Es ist von Vorteil, wenn die Transporteinrichtung zudem eine Feststell- und/oder Verschiebeeinheit aufweist zum Feststellen des verschiebbaren Transporteurs im Normalbetrieb und/oder zum Verschieben des verschiebbaren Transporteurs gegenüber dem anderen Transporteur, wenn ein Betrieb zum Verschieben des verschiebbaren Transporteurs vorliegt, und/oder der verschiebbare Transporteur kann eine Schienenführung zum Verschieben des verschiebbaren Transporteurs aufweisen. Mit der Schienenführung kann der verschiebbare Transporteur einfach wiederholbar an fest vorgegebene Positionen verschoben werden.

Gemäß einer Ausführungsvariante weist die Feststell- und/oder Verschiebeeinheit einen pneumatischen Zylinder auf, welcher im Normalbetrieb mit Druckluft zum Feststellen des verschiebbaren Transporteurs an seiner Position im Normalbetrieb beaufschlagt ist, und welcher im Betrieb zum Verschieben des verschiebbaren Transporteurs nicht mit Druckluft beaufschlagt ist. Dadurch kann erreicht werden, dass die Transporteinrichtung im Brandfall automatisch in einen sicheren Betrieb übergeht.

Gemäß einer weiteren Ausführungsvariante weist die Feststell- und/oder Verschiebeeinheit eine Haltefeder auf zum Halten des verschiebbaren Transporteurs an seiner Position im Normalbetrieb und zum Verschieben des verschiebbaren Transporteurs im Betrieb zum Verschieben des verschiebbaren Transporteurs. Auch dadurch kann erreicht werden, dass die Transporteinrichtung im Brandfall automatisch in einen sicheren Betrieb übergeht.

Die Feststell- und/oder Verschiebeeinheit kann derart ausgestaltet ist, dass sie von einer Erfassungseinrichtung zur Erfassung des Betriebs zum Verschieben des Transporteurs ansteuerbar ist.

Die zuvor beschriebene Transporteinrichtung kann Teil einer Behälterbehandlungsanlage sein, welche zudem mindestens eine Behandlungsstation zum Behandeln von Behältern aufweist, wobei die Transporteinrichtung zum Transport von Behältern zu der mindestens einen Behandlungsstation oder weg von der mindestens einen Behandlungsstation dient. Die Behälterbehandlungsanlage kann eine Blasmaschine oder eine Reinigungsmaschine oder eine Füllmaschine oder eine Etikettiermaschine sein oder umfassen.

Die zuvor genannte Aufgabe wird ferner durch ein Transportverfahren für eine Behälterbehandlungsanlage gelöst. Das Transportverfahren umfasst die Schritte: Transportieren, mit wenigstens zwei Transporteuren, von Behältern zu einer oder weg von einer Behandlungsstation der Behälterbehandlungsanlage, Erfassen eines Betriebs zum Verschieben mindestens einen verschiebbaren Transporteurs der wenigstens zwei Transporteure, und Verschieben des verschiebbaren Transporteurs gegenüber einem anderen Transporteur der wenigstens zwei Transporteure, wie im Anspruch 9 angegeben.

Das Transportverfahren erzielt die gleichen Vorteile, wie sie zuvor in Bezug auf die Transporteinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der im Folgenden beschriebenen Ausführungsbeispiele der Erfindung.

Nachfolgend ist die Erfindung unter Bezugnahme auf die beiliegenden Zeichnungen und anhand von Ausführungsbeispielen näher beschrieben. Es zeigen:
Fig. 1 ein schematisches Blockschaltbild einer Behälterbehandlungsanlage mit einer Transporteinrichtung gemäß einem ersten Ausführungsbeispiel;
Fig. 2 eine schematische Draufsicht auf die Transporteinrichtung gemäß dem ersten Ausführungsbeispiel im Normalbetrieb;
Fig. 3 eine schematische Draufsicht auf die Transporteinrichtung gemäß dem ersten Ausführungsbeispiel in einem im Brandfall geeigneten Betriebszustand;
Fig. 4 einen schematischen Querschnitt der Transporteinrichtung gemäß dem ersten Ausführungsbeispiel;
Fig. 5 eine schematische Draufsicht auf die Transporteinrichtung gemäß einem zweiten Ausführungsbeispiel im Normalbetrieb; und
Fig. 6 eine schematische Draufsicht auf die Transporteinrichtung gemäß dem zweiten Ausführungsbeispiel in einem im Brandfall geeigneten Betriebszustand;

In den Figuren sind gleiche oder funktionsgleiche Elemente, sofern nichts anderes angegeben ist, mit denselben Bezugszeichen versehen.

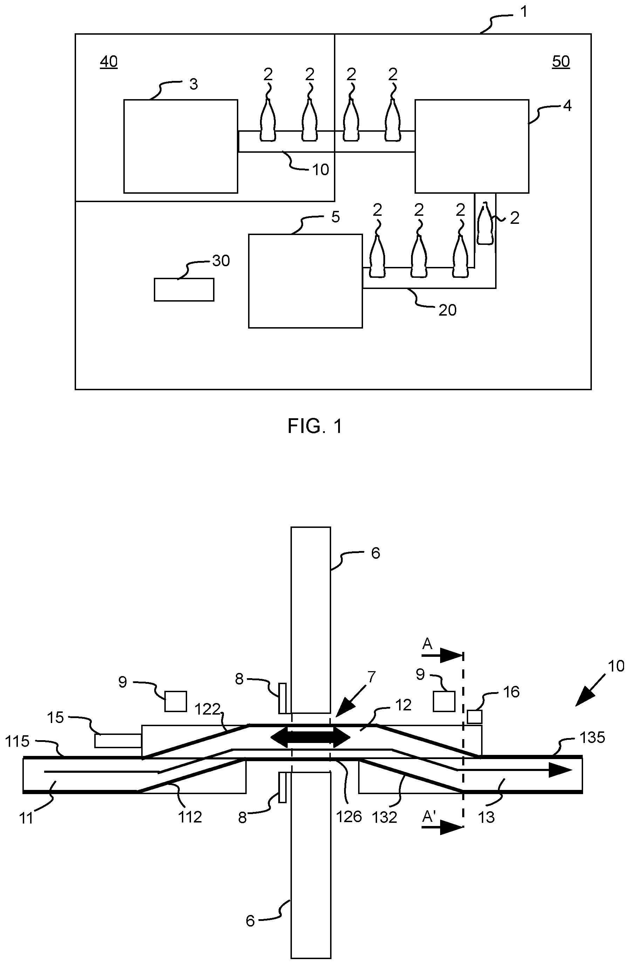

Fig. 1 zeigt sehr schematisch eine Behälterbehandlungsanlage 1 zur Behandlung von Behältern 2. Die Behälter 2 können entweder fertige Behälter, wie Glas- oder Kunststoffflaschen. Dosen. usw. oder auch Vorformlinge sein. In der Behälterbehandlungsanlage 1 in Fig. 1 können die Behälter 2 aus den Vorformlingen hergestellt sein. Die Vorformlinge sind aus Kunststoff, wie Polyäthylen-Terephthalat (PET), Polypropylen (PP) usw. gefertigt und sind ebenfalls Behälter, wenn auch noch unfertige bzw. von der Behälterbehandlungsanlage 1 unbehandelte Behälter. Die fertiggestellten Behälter 2 sind in Fig. 1 als Beispiel Flaschen, in die ein Produkt eingefüllt werden kann. Das Produkt kann insbesondere ein Getränk, ein Reinigungsmittel usw. sein.

In Fig. 1 umfasst die Behälterbehandlungsanlage 1 eine erste Behandlungsstation 3, eine zweite Behandlungsstation 4 und eine dritte Behandlungsstation 5 sowie eine erste Transporteinrichtung 10, eine zweite Transporteinrichtung 20 und eine Steuereinrichtung 30. Die erste Behandlungsstation 3 kann beispielsweise eine Füllmaschine zum Befüllen der Behälter 2 mit dem Produkt sein. Die zweite Behandlungsstation 4 kann beispielsweise eine Etikettiermaschine zum Etikettieren der befüllten Behälter 2 sein. Die dritte Behandlungsstation 5 kann beispielsweise eine Verpackungsmaschine zum Verpacken der Behälter 2 in insbesondere Gebinde mit einer bestimmten Anzahl von Behältern 2 sein, beispielsweise sechs Behälter 2. Die erste und zweite Transporteinrichtung 20 transportieren die Behälter 2 zwischen den einzelnen Behandlungsstationen 3, 4, 5 und einem ersten und zweiten Raum 40, 50, wie in Fig. 1 gezeigt. Die Steuereinrichtung 30 steuert die erste bis dritte Behandlungsstation 3, 4, 5 sowie die erste und zweite Transporteinrichtung 10, 20.

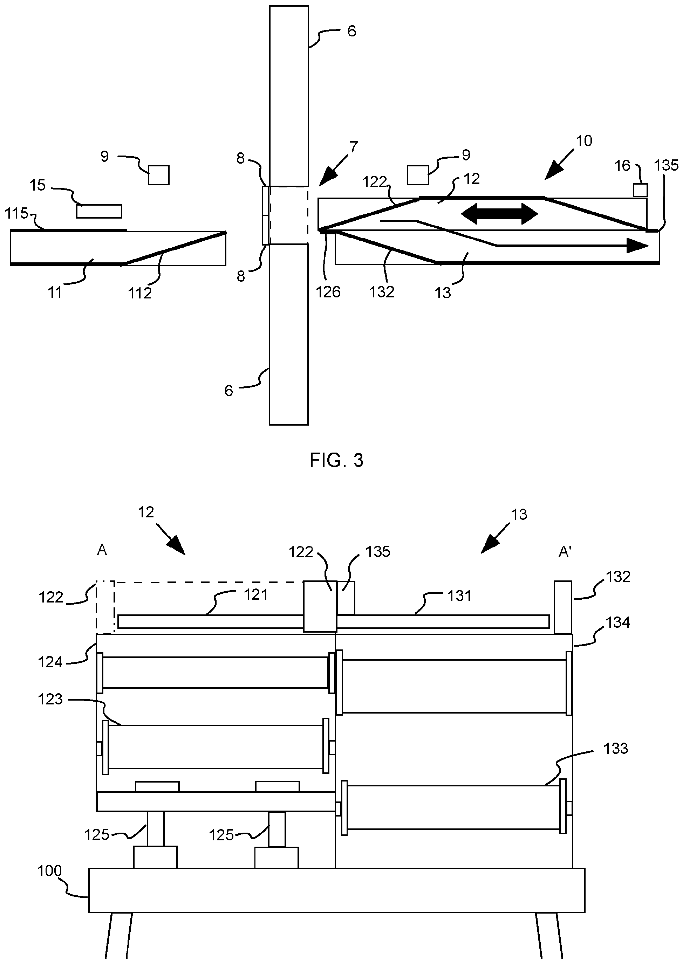

Fig. 2 stellt schematisch die erste Transporteinrichtung 10 an ihrem Montageort bei einer Wand 6 genauer dar, die insbesondere eine Brandschutzwand ist. Die Wand 6 hat eine Öffnung 7, die mit einer Tür 8 verschließbar ist. Die Tür 8 ist in Fig. 2 eine zweiflügelige Tür. Die Tür 8 kann insbesondere eine Brandschutztür oder -klappe oder eine sonstige Schließeinrichtung zum Schließen der Öffnung 7 sein. Auf beiden Seiten der Tür 8 ist jeweils eine Erfassungseinrichtung 9 montiert, die beispielsweise ein Brandmelder sein kann. Die erste Transporteinrichtung 10 hat einen ersten Transporteur 11 mit Geländern 112, 115, einen zweiten Transporteur 12 mit Geländern 122, 126, einen dritten Transporteur 13 mit Geländern 132, 135, eine Feststelleinheit 15 und eine Verschiebeeinheit 16. Letztere werden nachfolgend auch als Feststell- und/oder Verschiebeeinheit 15, 16 bezeichnet. Der erste und dritte Transporteur 11, 13 sind fest montierte Transporteure. Demgegenüber ist der zweite Transporteur 12 je nach Bedarf in oder zumindest teilweise durch die Öffnung 7 in den Richtungen eines schwarzen Blockpfeils in Fig. 2 oder Fig. 3 verschiebbar, so dass er angeordnet ist, wie in Fig. 2 gezeigt, oder aus der Öffnung 7 verschiebbar, so dass er angeordnet ist, wie in Fig. 3 gezeigt.

Das Geländer 112 ist an dem ersten Transporteur 11 derart montiert, dass es beim Verschieben des zweiten Transporteurs 12 relativ zu diesem fest stehen bleibt. Das Geländer 112 ist in seiner Form fest. Demgegenüber ist das Geländer 115 veränderbar, insbesondere verlängerbar bzw. verkürzbar, wie aus Fig. 2 und Fig. 3 ersichtlich. Dies kann beispielsweise in der Art eines Teleskops, einer Ziehharmonika, usw. erfolgen. Die Geländer 122, 126 sind an dem zweiten Transporteur 12 derart montiert, dass sie zusammen mit dem zweiten Transporteur 12 verschoben werden. Hierbei ist das Geländer 122 in seiner Form fest, wohingegen das weitere Geländer 126 veränderbar, insbesondere verlängerbar bzw. verkürzbar ist, wie ebenfalls aus Fig. 2 und Fig. 3 ersichtlich. Auch das Verändern des weiteren Geländers 126 kann beispielsweise in der Art eines Teleskops, einer Ziehharmonika, usw. erfolgen. Alternativ oder zusätzlich kann auch das Mittelstück des Geländers 122, das in der Verschieberichtung des zweiten Transporteurs angeordnet ist, veränderbar sein, insbesondere verlängerbar bzw. verkürzbar. Das Geländer 132 ist an dem dritten Transporteur 13 derart montiert, dass es beim Verschieben des zweiten Transporteurs 12 relativ zu diesem fest stehen bleibt. Somit ist auch das Geländer 132 in seiner Form fest. Demgegenüber ist das Geländer 135 veränderbar, insbesondere verlängerbar bzw. verkürzbar, wie ebenfalls aus Fig. 2 und Fig. 3 ersichtlich. Auch dies kann beispielsweise in der Art eines Teleskops, einer Ziehharmonika, usw. erfolgen. Ist jedoch auch das Mittelstück des Geländers 122 veränderbar, insbesondere verlängerbar bzw. verkürzbar, muss gegebenenfalls das Geländer 135 nicht veränderbar sein.

Somit sind die Geländer 126 und/oder 135 und/oder das Geländer 122 veränderbar oder verschiebbar. Hierbei ist ein Verschieben der Geländer 122, 126, 135 an ein Verschieben des zweiten Transporteurs 12 gekoppelt. Dadurch können die Geländer 126, 135 und gegebenenfalls das Geländer 122 durch ein Verschieben des zweiten Transporteurs 12 verändert werden.

Der zweite Transporteur 12 ist somit ein verfahrbarer oder verschiebbarer Transporteur 12. Dieser verfahrbare oder verschiebbare Transporteur 12 wird mittels der Feststelleinheit 15, die ein pneumatischer Zylinder sein kann, in geschlossener Position festgestellt und gehalten. Im Falle eines Stromausfalls kann der verschiebbare oder verfahrbare Transporteur 12 mit Hilfe der Verschiebeeinheit 16 zurückgezogen werden, um die zum Schließen der Tür 8 benötigte Lücke zu erreichen. Mit der Tür 8 kann eine schließbare räumliche Trennung zwischen dem Transporteur 11 und den Transporteuren 12, 13 erzielt werden. Die Entriegelung der Feststelleinheit 15 kann auch nicht nur durch Stromausfall oder -abschaltung sondern auch durch ein Sianal von der Steuereinrichtung 50 und/oder mindestens eine der Erfassungseinrichtungen 9 erfolgen, so dass die Verschiebeeinheit 16 zum Verschieben des zweiten Transporteurs 12 aktiviert werden kann. Hierbei kann die Erfassungseinrichtung 9 zur Erfassung des Betriebs zum Verschieben des zweiten Transporteurs 12 ausgestaltet sein. Ist die Erfassungseinrichtung 9 beispielsweise eine Brandmeldeanlage oder ein Brandmelder, wird der Brandfall erfasst, in welchem es zu einer unerwartet hohen Rauch- und/oder Wärmeentwicklung in mindestens einem der Räume 40, 50 oder im übergeordneten Gebäude kommt. Der Brandmelder kann auch an die Brandmeldeanlage angeschlossen sein.

Wie in Fig. 2 und Fig. 3 ersichtlich, ist der zweite Transporteur 12 sowohl neben dem ersten als auch neben dem dritten Transporteur 13 angeordnet. Hierbei grenzen in Fig. 2 der erste und zweite Transporteur 11, 12 aneinander an und der zweite und dritte Transporteur 12, 13 grenzen aneinander an. In Fig. 3 grenzen nur der zweite und dritte Transporteur 12, 13 aneinander an. Die Behälter 2 werden in Richtung des gezackten Pfeils auf den Transporteuren 11, 12, 13 transportiert. Die genaue Montageposition der Feststell- und/oder Verschiebeeinheit 15, 16 ist je nach deren Ausführung und der Ausführung der Transporteinrichtung 10 beliebig wählbar.

Fig. 4 zeigt in einer vereinfachten Darstellung schematisch den Aufbau der Transporteinrichtung 10 in einem Schnitt A-A' von Fig. 2 genauer. Bei der Transporteinrichtung 10 hat der zweite Transporteur 12 ein Transportband 121, das Geländer 122, eine Umlenkrolle 123 für das endlose Transportband 121, ein Gestell 124 sowie Schienenführungen 125, die an einem Unterbau 100 der Transporteinrichtung 10 montiert sind. Das weitere Geländer 126 ist in der Schnittansicht von Fig. 4 nicht sichtbar. Der zweite Transporteur 12 kann also geführt durch die Schienenführungen 125 in die Zeichnungsebene von Fig. 4 hinein oder heraus auf dem Unterbau 100 hin- und hergeschoben werden. Das Transportband 121 ist als Kettentransportband ausgestaltet.

Außerdem hat der dritte Transporteur 13, wie in Fig. 4 gezeigt, ein Transportband 131, das Geländer 132, eine Umlenkrolle 133 für das endlose Transportband 131, ein Gestell 134 sowie das weiteres Geländer 135. Das weitere Geländer 135 ist mit dem Geländer 122 des zweiten Transporteurs 12 schräg zur Transportrichtung der Behälter 2 verbunden. Damit kann das Geländer 135 zusammen mit dem Geländer 122 des zweiten Transporteurs 12 einen schrägen Überschub der Behälter 2 vom zweiten Transporteur 12 zum dritten Transporteur 13 bewerkstelligen. Der dritte Transporteur 13 ist mit seinem Gestell 134 fest an dem Unterbau 100 montiert. Somit ist der dritte Transporteur 13 unverschiebbar gegenüber dem Unterbau 100. Da der Unterbau 100 auch fest an dem Boden des Raumes 50 montiert ist, ist der dritte Transporteur 13 auch fest oder unverschiebbar im Raum 50 montiert. Auch das Transportband 131 kann als Kettentransportband ausgestaltet sein.

Zumindest im verfahrbaren Bereich des schrägen Überschubs der Behälter 2 vom einen zum anderen aneinandergrenzenden Transporteur 11, 12 oder 12, 13 ist der Übergang bei den Transportbändern 121, 131 der beiden aneinandergrenzenden Transporteure 11, 12 oder 12, 13 ohne Zwischenraum ausgeführt. Somit sind die beiden aneinandergrenzenden Transporteure 11, 12 oder 12, 13 bündig montiert, was auch als true flush mount bezeichnet wird. In der in Fig. 2 bis Fig. 4 gezeigten Ausführung entspricht der verfahrbare Bereich des schrägen Überschubs der Behälter 2 vom einen zum anderen aneinandergrenzenden Transporteur 11, 12 oder 12, 13 der Länge des zweiten Transporteurs 12.

Der erste Transporteur 11 ist analog zu dem dritten Transporteur 13 ausgeführt.

Somit wird bei dem vorliegenden Ausführungsbeispiel bei der Tür 8 mit getrennter Transport- oder Fördertechnik, ein verfahrbarer oder verschiebbarer Transporteur 12 eingesetzt. Um den notwendigen Raum zum Schließen der Öffnung 7 mit der Tür 8 zu erreichen, wenn ein Betrieb zum Verschieben des Transporteurs 12 vorliegt, wird ein horizontal auf Schienen montierter Transporteur 12 verwendet. Dieser verfahrbare oder verschiebbare Transporteur 12 wird mittels der Feststelleinheit 15 in geschlossener Position festgestellt und gehalten sowie bei Bedarf entriegelt und von der Verschiebeeinheit 16 zurückgezogen, um die zum Schließen der Tür 8 benötigte Lücke zu erreichen. Demzufolge erfolgt die Verschiebung automatisch. Hierbei kann zusätzlich oder alternativ zu der mindestens einen Erfassungseinrichtung 9 die Steuereinrichtung 30 Verwendung finden.

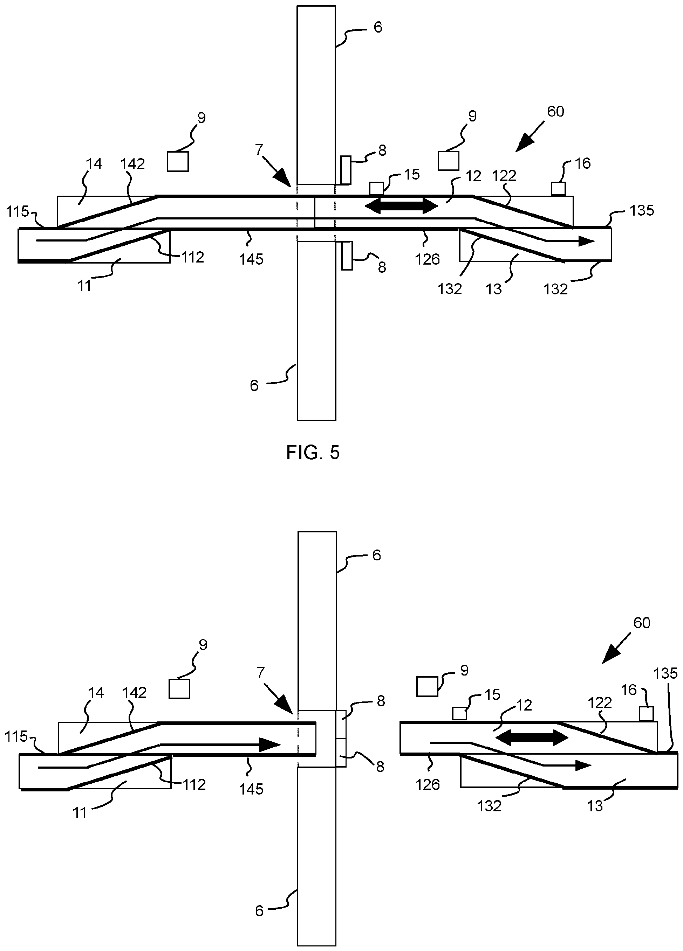

Gemäß einer Modifikation des vorliegenden Ausführungsbeispiels kann die Feststelleinheit zusätzlich oder alternativ zu dem pneumatischen Zylinder auch eine Haltefeder zum Halten des verschiebbaren Transporteurs an seiner Position im Normalbetrieb gemäß Fig. 2 oder Fig. 5 aufweisen. Bei einem Betrieb zum Verschieben des verschiebbaren Transporteurs 12, insbesondere im Brandfall, dient die Haltefeder hingegen zum Verschieben des verschiebbaren Transporteurs 12 in die in Fig. 3 oder Fig. 6 gezeigte Position. Die Haltefeder bildet somit eine Feststell- und Verschiebeeinheit 15, 16.

Fig. 5 zeigt eine Transporteinrichtung 60 gemäß einem zweiten Ausführungsbeispiel. Die Transporteinrichtung 60 gemäß einem zweiten Ausführungsbeispiel ist in weiten Teilen ausgeführt wie die Transporteinrichtung 10 gemäß dem ersten Ausführungsbeispiel. Daher werden nachfolgend nur die Unterschiede zwischen den beiden Ausführungsbeispielen beschrieben.

Im Unterschied zum ersten Ausführungsbeispiel hat die Transporteinrichtung 60 bei diesem Ausführungsbeispiel anstelle nur eines seitlich neben dem ersten und dritten Transporteur 11, 3 angeordneten verschiebbaren Transporteurs 12 noch einen vierten Transporteur 14 mit Geländern 142, 145. Der vierte Transporteur 14 ist ebenfalls, wie der erste und dritte Transporteur 11, 13 fest montiert und kann auch analog zu diesen ausgeführt sein. Bei dem vorliegenden Ausführungsbeispiel können die Geländer 112, 115 des ersten Transporteurs und die Geländer 142, 145 des zweiten Transporteurs jedoch unveränderlich sein. Der vierte Transporteur 14 ist neben dem ersten Transporteur 11 angeordnet. Zudem ist der vierte Transporteur 14 derart angeordnet, dass er stumpf an dem zweiten Transporteur 12 angeordnet ist, wenn der zweite Transporteur 12 in die Öffnung 7 geschoben und von der Feststelleinheit 15 festgestellt und gehalten wird. Somit bildet der zweite Transporteur 12 eine direkte Verlängerung des vierten Transporteurs 14 bei dem in Fig. 5 gezeigten Ausführungsbeispiel. Somit ist der verschiebbare Transporteur 12 im Normalbetrieb quer zur Transportrichtung der Behälter 2 an dem vierten Transporteur 14 angeordnet.

In Fig. 6 ist der Fall gezeigt, wenn der zweite Transporteur 12 aus der Öffnung 7 gezogen ist, so dass die Tür 8 geschlossen werden kann. Auch bei dem vorliegenden Ausführungsbeispiel kann der zweite Transporteur 12 mit Hilfe einer Verschiebeeinheit 16 aus der Öffnung 7 gezogen werden, wie beim ersten Ausführungsbeispiel beschrieben. Ist die Tür 8 wieder geöffnet, kann der zweite Transporteur 12 wieder in Richtung des weißen Blockpfeils in die Öffnung 7 und damit an den vierten Transporteur 14 geschoben werden. Beim Verschieben des zweiten Transporteurs 12 verändern sich die Geländer 126 und/oder 122 und/oder 135 wie beim ersten Ausführungsbeispiel beschrieben.

Der zweite und dritte Transporteur 12, 13 sind wieder aufgebaut, wie in Fig. 4 im Querschnitt gezeigt. Somit ist auch bei dem vorliegenden Ausführungsbeispiel zumindest im verfahrbaren Bereich des schrägen Überschubs der Behälter 2 vom einen zum anderen aneinandergrenzenden Transporteur 12, 13 der Übergang bei den Transportbändern 121, 131 der beiden aneinandergrenzenden Transporteure 12, 13 ohne Zwischenraum ausgeführt. In der in Fig. 5 und Fig. 6 gezeigten Ausführung entspricht der verfahrbare Bereich des schrägen Uberschubs der Behälter 2 vom einen zum anderen aneinandergrenzenden Transporteur 12, 13 der Länge des dritten Transporteurs 12.

In einer Modifikation des vorliegenden Ausführungsbeispiels ist kein erster Transporteur 11 vorhanden.

Alle zuvor beschriebenen Ausgestaltungen der Behälterbehandlungsanlage 1, der Transporteinrichtungen 10, 20, 60 und des zuvor beschriebenen Transportverfahrens können einzeln oder in allen möglichen Kombinationen Verwendung finden. Die Merkmale des ersten und zweiten Ausführungsbeispiels und/oder deren Modifikationen sind beliebig miteinander kombinierbar. Zusätzlich sind insbesondere folgende Modifikationen denkbar. Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind. Zudem ist die Transportrichtung der Behälter 2 nur als Beispiel dargestellt und kann auch umgekehrt sein.

Die Behälterbehandlungsanlage 1 des ersten oder zweiten Ausführungsbeispiels kann auch zur Behandlung von Glasflaschen Verwendung finden. Zudem kann die Behälterbehandlungsanlage 1 eine Blasmaschine, eine Reinigungsmaschine, eine Füllmaschine, eine Etikettiermaschine, usw. direkt in einer Reihe hintereinander angeordnet haben, so dass die Behälter 2 jeweils von der vorhergehenden Maschine zur folgenden Maschine mittels einer der beschriebenen Transporteinrichtungen 10, 20 oder 60, 20 transportiert werden können.

Es ist möglich, dass der erste Transporteur 11 eine andere Größe hat, als der zweite Transporteur 12 und/oder der dritte Transporteur 13 und/oder der vierte Transporteur 14.

Die Tür 8 kann auch eine einflügelige Tür oder eine Schiebetür sein. Die Tür 8 muss auch nicht seitlich von der Tür 8 geöffnet werden sondern kann auch eine nach oberhalb oder unterhalb der Transporteinrichtung 10, 60 klappbare Tür sein.

Mindestens einer der Transporteure 11 bis 14 kann von einer Antriebseinheit angetrieben sein. Zusätzlich oder alternativ kann mindestens einer der Transporteure 11, 13 und 14 ein Schwerkraftförderer sein.

### Bezugszeichenliste

- 1: Behälterbehandlungsanlage
- 2: Behälter
- 3, 4, 5: Behandlungsstation
- 6: Wand
- 7: Öffnung
- 8: Tür
- 9: Erfassungseinrichtung
- 10: Erste Transporteinrichtung
- 11: Erster Transporteur
- 12: Zweiter Transporteur
- 13: Dritter Transporteur
- 14: Vierter Transporteur
- 15: Feststelleinheit
- 16: Verschiebeeinheit
- 20: Zweite Transporteinrichtung
- 30: Steuereinrichtung
- 40: Erster Raum
- 50: Zweiter Raum
- 60: Transporteinrichtung
- 100: Unterbau
- 112, 115: Geländer des ersten Transporteurs
- 121, 131: Transportband
- 122, 126: Geländer des zweiten Transporteurs
- 123, 133: Umlenkrolle
- 124, 134: Gestell
- 125: Schienenführung
- 132, 135: Geländer des dritten Transporteurs
- 142, 145: Geländer des vierten Transporteurs

## Patentansprüche

1. Transporteinrichtung (10; 60) für eine Behälterbehandlungsanlage (1), mit wenigstens einem ersten, einem zweiten und einem dritten Transporteur (11 bis 13; 11 bis 14) zum Transport von Behältern (2) zu einer oder weg von einer Behandlungsstation (3, 4) der Behälterbehandlungsanlage (1),
wobei der zweite Transporteur (12) verschiebbar gegenüber dem ersten Transporteur (11, 13; 13, 14) angeordnet ist, um eine schließbare räumliche Trennung zwischen dem zweiten Transporteur (12) und dem ersten Transporteur (11; 11, 14) herzustellen,
wobei der zweite Transporteur (12) angrenzend neben dem dritten Transporteur (11, 13; 13; 14) angeordnet ist,
wobei der zweite Transporteur (12) ein Kettentransporteur ist, und
wobei zumindest einer der drei Transporteure (12, 13) ein Geländer (126, 135; 122, 126, 135) aufweist, welches durch ein Verschieben des zweiten Transporteurs (12) veränderbar ist.

2. Transporteinrichtung (10; 60) nach Anspruch 1, wobei im Bereich eines schrägen Überschubs von Behältern (2) vom zweiten Transporteur (12) zu dem angrenzend angeordneten Transporteur (11 bis 13; 11 bis 14) oder umgekehrt ein Kettenübergang ohne Zwischenraum ausgeführt ist.

3. Transporteinrichtung (10; 60) nach einem der vorangehenden Ansprüche,
zudem mit einer Feststell- und/oder Verschiebeeinheit (15, 16) zum Feststellen des zweiten Transporteurs (12) im Normalbetrieb und/oder zum Verschieben des zweiten Transporteurs (12) gegenüber dem ersten Transporteur (11, 13; 13, 14), wenn ein Betrieb zum Verschieben des zweiten Transporteurs (12) vorliegt, und/oder wobei der zweite Transporteur (12) eine Schienenführung (125) zum Verschieben des zweiten Transporteurs (12) aufweist.

4. Transporteinrichtung (10; 60) nach Anspruch 3, wobei die Feststell- und/oder Verschiebeeinheit (15, 16) einen pneumatischen Zylinder aufweist, welcher im Normalbetrieb mit Druckluft zum Feststellen des zweiten Transporteurs (12) an seiner Position im Normalbetrieb beaufschlagt ist, und welcher im Betrieb zum Verschieben des zweiten Transporteurs (12) nicht mit Druckluft beaufschlagt ist.

5. Transporteinrichtung (10; 60) nach Anspruch 3 oder 4, wobei die Feststell- und/oder Verschiebeeinheit (15, 16) eine Haltefeder aufweist zum Halten des zweiten Transporteurs (12) an seiner Position im Normalbetrieb und zum Verschieben des zweiten Transporteurs (12) im Betrieb zum Verschieben des zweiten Transporteurs (12).

6. Transporteinrichtung (10; 60) nach einem der Ansprüche 3 bis 5, wobei die Feststell- und/oder Verschiebeeinheit (15, 16) derart ausgestaltet ist, dass sie von einer Erfassungseinrichtung (9) zur Erfassung des Betriebs zum Verschieben des zweiten Transporteurs (12) ansteuerbar ist.

7. Behälterbehandlungsanlage, mit
mindestens einer Behandlungsstation (3, 4, 5) zum Behandeln von Behältern (2), und
einer Transporteinrichtung (10; 60) nach einem der Ansprüche 1 bis 6 zum Transport von Behältern (2) zu der mindestens einen Behandlungsstation (3, 4) oder weg von der mindestens einen Behandlungsstation (3, 4).

8. Behälterbehandlungsanlage nach Anspruch 7, wobei die Behälterbehandlungsanlage (1) eine Blasmaschine oder eine Reinigungsmaschine oder eine Füllmaschine oder eine Etikettiermaschine ist oder umfasst.

9. Transportverfahren für eine Behälterbehandlungsanlage (1), mit den Schritten
Transportieren, mit einer Transporteinrichtung (10; 60) nach einem der Ansprüche 1 bis 6, von Behältern (2) zu einer oder weg von einer Behandlungsstation (3, 4) der Behälterbehandlungsanlage (1),
Erfassen eines Betriebs zum Verschieben des zweiten Transporteurs (12) des wenigstens einen Transporteurs (11 bis 13; 11 bis 14), und
Verschieben des zweiten Transporteurs (12) gegenüber dem ersten Transporteur (11, 13; 13, 14) des wenigstens einen Transporteurs (11 bis 13; 11 bis 14), um die schließbare räumliche Trennung zwischen dem zweiten Transporteur (12) und dem ersten Transporteur (11; 11, 14) herzustellen.

## Claims

1. A transport device (10; 60) for a container treatment plant (1), the transport device comprising
at least a first, a second and a third transporter (11 to 13; 11 to 14) for transporting containers (2) to or away from a treatment station (3, 4) of the container treatment plant (1),
wherein the second transporter (12) is positioned displaceable in relation to the first transporter (11, 13; 13, 14) to provide a closeable spatial separation between the second transporter (12) and the first transporter (11; 11, 14),
wherein the second transporter (12) is positioned as adjoining side by side to the third transporter (11, 13; 13; 14),
wherein the second transporter (12) is a chain transporter, and
wherein at least one of the three transporters (12, 13) comprises a railing (126, 135; 122, 126, 135) which is changeable by displacing the second transporter (12).

2. The transport device (10; 60) according to claim 1, wherein a chain transition without space in-between is implemented in the range of an oblique over thrust of containers (2) either from the second transporter (12) to the transporter (11 to 13; 11 to 14) positioned as adjoining side by side to the second transporter (12) or vice-versa.

3. The transport device (10; 60) according to any one of the preceding claims, further comprising a locking unit (15) and/or displacing unit (16) for locking the second transporter (12) during normal operation state and/or for displacing the second transporter (12) in relation to the first transporter (11, 13; 13, 14) when an operation for displacing the second transporter (12) is present, and/or wherein the second transporter (12) comprises a rail guide (125) for displacing the second transporter (12).

4. The transport device (10; 60) according to claim 3, wherein the locking unit (15) and/or displacing unit (16) comprises a pneumatic cylinder which is exposed in normal operation state to pressurized air for locking the second transporter (12) at its position in the normal operation state, and which is not exposed to pressurized air in an operation state for displacing the second transporter (12).

5. The transport device (10; 60) according to claim 3 or 4, wherein the locking unit (15) and/or displacing unit (16) comprises a retaining spring for retaining the second transporter (12) at its position in normal operation state and for displacing the second transporter (12) in the operation state for displacing the displaceable transporter (12).

6. The transport device (10; 60) according to any one of claims 3 to 5, wherein the locking unit (15) and/or displacing unit (16) are/is configured such that they are/ it is drivable by a detecting device (9) for detecting the operation for displacing the second transporter (12).

7. A container treatment plant, comprising
at least one treatment station (3, 4, 5) for treating containers (2), and
a transport device (10; 60) according to any one of claims 1 to 6 for transporting containers (2) to the at least one treatment station (3, 4) or away from the at least one treatment station (3, 4).

8. The container treatment plant according to claim 7, wherein the container treatment plant (1) is or comprises a blow moulding machine or a cleaning machine or a filling machine or a labeling machine.

9. A transport method for a container treatment plant (1), comprising the steps of:
transporting, by at least one transport device (10; 60) according to any one of claims 1 to 6, containers (2) to or away from a treatment station (3, 4) of the container treatment plant (1),
detecting an operation state for displacing the second transporter (12) of the at least one transporter (11 to 13; 11 to 14), and
displacing the second transporter (12) in relation to the first transporter (11, 13; 13, 14) of the at least one transporter (11 to 13; 11 to 14), to realize a closeable spatial separation between the second transporter (12) and the first transporter (11; 11, 14).

## Revendications

1. Dispositif de transport (10 ; 60) pour une installation de traitement de récipients (1), le dispositif de transport comprenant:
au moins un premier, un deuxième et un troisième transporteur (11 à 13 ; 11 à 14) pour transporter des récipients (2) vers ou à distance d'une station de traitement (3, 4) de l'installation de traitement de récipients (1),
dans lequel le deuxième transporteur (12) est positionné de manière déplaçable par rapport au premier transporteur (11, 13 ; 13, 14) afin de fournir une séparation spatiale refermable entre le deuxième transporteur (12) et le premier transporteur (11 ; 11, 14),
dans lequel le deuxième transporteur (12) est positionné tel qu'attenant, côté à côte par rapport au troisième transporteur (11, 13 ; 13 ; 14),
dans lequel le deuxième transporteur (12) est un transporteur à chaîne, et
dans lequel au moins l'un des trois transporteurs (12, 13) comprend un garde-corps (126, 135 ; 122, 126, 135) qui peut être modifié en déplaçant le deuxième transporteur (12).

2. Dispositif de transport (10 ; 60) selon la revendication 1, dans lequel une transition à chaîne sans espace est mise en œuvre dans la plage d'un chevauchement oblique des récipients (2) du deuxième transporteur (12) au transporteur (11 à 13 ; 11 à 14) positionné tel qu'attenant, côte à côté par rapport au deuxième transporteur (12) ou vice versa.

3. Dispositif de transport (10 ; 60) selon l'une quelconque des revendications précédentes, comprenant en outre une unité de verrouillage (15) et/ou une unité de déplacement (16) pour verrouiller le deuxième transporteur (12) pendant un état de fonctionnement normal et/ou pour déplacer le deuxième transporteur (12) par rapport au premier transporteur (11, 13 ; 13, 14) lorsqu'une opération pour déplacer le deuxième transporteur (12) existe, et/ou dans lequel le deuxième transporteur (12) comprend un guide de rail (125) pour déplacer le deuxième transporteur (12).

4. Dispositif de transport (10 ; 60) selon la revendication 3, dans lequel l'unité de verrouillage (15) et/ou l'unité de déplacement (16) comprend un vérin pneumatique qui est exposé à l'état de fonctionnement normal à l'air sous pression pour verrouiller le deuxième transporteur (12) dans sa position à l'état de fonctionnement normal, et qui n'est pas exposé à l'air sous pression dans un état de fonctionnement pour déplacer le deuxième transporteur (12).

5. Dispositif de transport (10 ; 60) selon la revendication 3 ou 4, dans lequel l'unité de verrouillage (15) et/ou l'unité de déplacement (16) comprend un ressort de retenue pour retenir le deuxième transporteur (12) dans sa position à l'état de fonctionnement normal et pour déplacer le deuxième transporteur (12) à l'état de fonctionnement pour déplacer le transporteur (12) déplaçable.

6. Dispositif de transport (10 ; 60) selon l'une quelconque des revendications 3 à 5, dans lequel l'unité de verrouillage (15) et/ou l'unité de déplacement (16) sont/est configurée(s) de sorte qu'elles peuvent / qu'elle peut être entraînée(s) par un dispositif de détection (9) pour détecter le fonctionnement afin de déplacer le deuxième transporteur (12).

7. Installation de traitement de récipients comprenant :
au moins une station de traitement (3, 4, 5) pour traiter des récipients (2), et
un dispositif de transport (10 ; 60) selon l'une quelconque des revendications 1 à 6 pour transporter des récipients (2) jusqu'à la au moins une station de traitement (3, 4) ou à distance de la au moins une station de traitement (3, 4).

8. Installation de traitement de récipients selon la revendication 7, dans laquelle l'installation de traitement de récipients (1) est ou comprend une machine de moulage par extrusion soufflage ou une machine de nettoyage ou une machine de remplissage ou une machine d'étiquetage.

9. Procédé de transport pour une installation de traitement de récipients (1) comprenant les étapes suivantes:
transporter, par au moins un dispositif de transport (10 ; 60) selon l'une quelconque des revendications 1 à 6, des récipients (2) vers ou à distance d'une station de traitement (3, 4) de l'installation de traitement de récipients (1),
détecter un état de fonctionnement pour déplacer le deuxième transporteur (12) du au moins un transporteur (11 à 13 ; 11 à 14), et
déplacer le deuxième transporteur (12) par rapport au premier transporteur (11, 13 ; 13, 14) du au moins un transporteur (11 à 13 ; 11 à 14), afin de réaliser une séparation spatiale refermable entre le deuxième transporteur (12) et le premier transporteur (11 ; 11, 14).
